# FASCICULE DE BREVET EUROPEEN

(11) **EP 3 894 283 B1**
(45) Date de publication et mention de la délivrance du brevet: **21.02.2024**
(21) Numéro de dépôt: 19842593.6
(22) Date de dépôt: 02.12.2019
(51) Int. Cl.: B60R 25/04, B60R 25/24

(54) **PROCEDE DE COMMANDE D'UN VEHICULE A PLUSIEURS MODE DE FONCTIONNEMENT**
VERFAHREN ZUR STEUERUNG EINES FAHRZEUGS MIT MEHREREN BETRIEBSARTEN
METHOD FOR CONTROLLING A VEHICLE WITH A PLURALITY OF OPERATING MODES

(30) Priorité: 12.12.2018 FR 1872733
(43) Date de publication de la demande: 20.10.2021
(73) Titulaire: Stellantis Auto SAS, 78300 Poissy (FR)
(72) Inventeur: ANTONIUCCI, Lionel, 92000 NANTERRE (FR); LANOUE, Stephane, 77580 COULOMMES (FR)
(86) Numéro de dépôt international: PCT/FR2019/052882
(87) Numéro de publication internationale: WO 2020/120872

(56) Documents cités:
- EP-A2- 2 264 672
- DE-A1-102006 009 899
- DE-A1-102008 039 156
- FR-A1- 2 975 561
- US-A1- 2010 071 427

## Description

### Domaine technique de l'invention

Le domaine technique de l'invention concerne la gestion de modes de fonctionnement d'un véhicule. En ce sens, l'invention est relative à un procédé de commande d'un véhicule, notamment automobile.

### Etat de la technique

De manière classique, un dispositif d'immobilisation, aussi appelé « immobiliseur », pour véhicule automobile comporte les moyens nécessaires pour empêcher le démarrage du véhicule lorsqu'un dispositif d'identification mains-libres du véhicule n'est pas présent dans l'habitacle du véhicule. Dans le fonctionnement classique du dispositif d'immobilisation, par exemple de type anti-démarrage codé, un nombre aléatoire est généré par un calculateur tel qu'un calculateur de contrôle d'un moteur thermique. Ce nombre aléatoire est envoyé par un bus système série (par exemple de type CAN) à un boîtier de servitude intelligent. Si le dispositif d'identification mains-libres est authentifié par le boîtier de servitude intelligent ayant reçu le nombre aléatoire, ce dernier répond au calculateur de contrôle du moteur thermique en lui envoyant une clé chiffrée permettant le déverrouillage du dispositif d'immobilisation pour autoriser le démarrage du véhicule et son fonctionnement sans restrictions.

Les véhicules évoluent actuellement pour répondre à de nouveaux besoins comme la fourniture d'un service supplémentaire pouvant impacter le fonctionnement du véhicule.

Par exemple, il est connu de la demande de brevet DE102013202958 une solution pour restreindre le fonctionnement d'un véhicule pour passer ce véhicule d'un mode de fonctionnement totalement opérationnel pour un conducteur principal à un mode de fonctionnement restreint pour un conducteur secondaire. Le passage de ce mode de fonctionnement totalement opérationnel au mode de fonctionnement restreint peut se faire à l'aide d'un code. Cette solution est limitée à un mode de fonctionnement restreint. Par ailleurs, il se pose un problème de fluidité du passage d'un mode de fonctionnement à l'autre. En effet, la demande de brevet DE102013202958 propose d'utiliser une minuterie pour autoriser, au terme de la minuterie, le changement du mode de fonctionnement restreint au mode de fonctionnement totalement opérationnel, ceci pose donc un problème de fluidité de la variation du mode de fonctionnement restreint au mode de fonctionnement totalement opérationnel. Par ailleurs, cette demande de brevet DE102013202958 évoque aussi que le changement de mode de fonctionnement peut requérir que le véhicule soit garé pour permettre le changement de mode de fonctionnement. Dans un autre exemple, le document US 2010 071427 décrit un procédé de commande d'un véhicule permettant une transition d'un mode de fonctionnement du véhicule à un autre.

### Présentation de l'invention

L'invention a pour but de permettre une transition fluide lors de l'activation d'un mode de fonctionnement d'un véhicule alors que ce véhicule était initialement en train d'exécuter un autre mode de fonctionnement.

A cet effet, l'invention a pour objet un procédé de commande d'un véhicule, ledit procédé de commande comportant une étape de mise en oeuvre d'un premier mode de fonctionnement du véhicule pour lequel le véhicule fonctionne au moins partiellement, le premier mode de fonctionnement étant associé à un état de fonctionnement du véhicule autorisant ladite mise en oeuvre du premier mode de fonctionnement, ce procédé de commande est caractérisé en ce qu'il comporte :
- une étape de surveillance périodique de la réalisation d'un évènement au cours de l'étape de mise en oeuvre du premier mode de fonctionnement pour détecter l'évènement,
- une étape de modification de l'état de fonctionnement, déclenchée par la détection de l'évènement, pour autoriser l'activation d'un deuxième mode de fonctionnement du véhicule associé à l'état de fonctionnement modifié,
- une étape d'activation du deuxième mode de fonctionnement du véhicule autorisé par l'état de fonctionnement modifié.

Un tel procédé de commande présente l'avantage, du fait de la surveillance périodique qu'il met en oeuvre, de permettre l'activation du deuxième mode de fonctionnement via la modification de l'état de fonctionnement provoquée par la détection de la réalisation de l'évènement issue de l'étape de surveillance. En ce sens, l'activation du deuxième mode de fonctionnement peut se faire de manière fluide et transparente pour le conducteur du véhicule.

Le procédé de commande peut comporter une ou plusieurs des caractéristiques suivantes :
- le véhicule comporte un premier calculateur fournissant au moins une prestation au cours de l'étape de mise en oeuvre du premier mode de fonctionnement et un deuxième calculateur assurant la gestion du véhicule, et l'étape de surveillance comporte : un envoi périodique, de préférence à intervalles réguliers, d'un premier message par le premier calculateur au deuxième calculateur ; à chaque réception de premier message par le deuxième calculateur, un envoi d'un deuxième message émis par le deuxième calculateur au premier calculateur ; à chaque réception de deuxième message par le premier calculateur, un traitement dudit deuxième message par le premier calculateur déclenchant la mise en oeuvre de l'étape de modification de l'état de fonctionnement lorsque le deuxième message indique que l'évènement s'est réalisé ;
- chaque deuxième message envoyé par le deuxième calculateur est élaboré par le deuxième calculateur de telle sorte que : préalablement à la réalisation de l'événement, le deuxième message comporte une première information représentative de l'état de fonctionnement associé au premier mode de fonctionnement ; lorsque l'évènement s'est réalisé, le deuxième message comporte une deuxième information représentative de l'état de fonctionnement autorisant l'activation du deuxième mode de fonctionnement ;
- le procédé de commande est tel que : l'état de fonctionnement associé au premier mode de fonctionnement est un état de déverrouillage partiel tel que le véhicule fonctionne de manière restreinte lors de la mise en oeuvre du premier mode de fonctionnement ; le procédé de commande comporte une étape d'authentification d'un dispositif d'identification du véhicule d'où il résulte la réalisation de l'évènement ; l'étape de modification de l'état de fonctionnement assure le passage de l'état de fonctionnement à un état de déverrouillage total du véhicule autorisant le fonctionnement du véhicule sans restriction ;
- le premier mode de fonctionnement est un service de pré-conditionnement thermique du véhicule, ou le premier mode de fonctionnement est un service de stationnement autonome du véhicule ;
- le procédé de commande est tel que : l'état de fonctionnement associé au premier mode de fonctionnement est un état de déverrouillage total autorisant le fonctionnement sans restriction du véhicule ; le procédé de commande comporte une étape de demande d'activation du deuxième mode de fonctionnement ; l'évènement comporte l'étape de demande d'activation du deuxième mode de fonctionnement ;
- un dispositif d'identification du véhicule étant présent dans un habitacle du véhicule au cours de l'étape de mise en oeuvre du premier mode de fonctionnement, l'évènement comporte le retrait du dispositif d'identification de l'habitacle ;
- le deuxième mode de fonctionnement est un service de stationnement autonome du véhicule ou un service de pré-conditionnement thermique du véhicule, et au terme de la mise en oeuvre de ce service, le procédé de commande comporte une étape d'arrêt du deuxième mode de fonctionnement et une étape de changement de l'état de fonctionnement vers un état verrouillé du véhicule assurant l'immobilisation du véhicule.

L'invention est aussi relative à un dispositif d'immobilisation pour véhicule, ce dispositif d'immobilisation comportant des moyens pour l'exécution des étapes du procédé de commande tel que décrit.

L'invention est aussi relative à un véhicule comportant le dispositif d'immobilisation tel que décrit.

D'autres avantages et caractéristiques pourront ressortir clairement de la description qui va suivre.

### Brève description des figures

L'invention sera mieux comprise à la lecture de la description qui va suivre, donnée uniquement à titre d'exemple non limitatif et faite en se référant aux dessins annexés et listés ci-dessous.
[Fig. 1] La figure 1 représente un véhicule automobile selon un mode de réalisation de l'invention.
[Fig. 2] La figure 2 illustre des étapes d'un procédé de commande selon un mode de réalisation de l'invention.
[Fig. 3] La figure 3 illustre un dialogue entre deux calculateurs pour mettre en oeuvre une surveillance de la réalisation d'un évènement permettant de modifier un état de fonctionnement lié au véhicule.
[Fig. 4] La figure 4 illustre un dispositif d'immobilisation permettant de mettre en oeuvre le procédé de commande.
[Fig. 5] La figure 5 illustre le séquencement complet des états que l'état de fonctionnement peut adopter.
[Fig. 6] La figure 6 illustre un exemple particulier de dialogue entre deux calculateurs permettant la modification à plusieurs reprises de l'état de fonctionnement.
[Fig. 7] La figure 7 illustre un autre exemple particulier de dialogue entre deux calculateurs permettant la modification à plusieurs reprises de l'état de fonctionnement.

### Description détaillée de l'invention

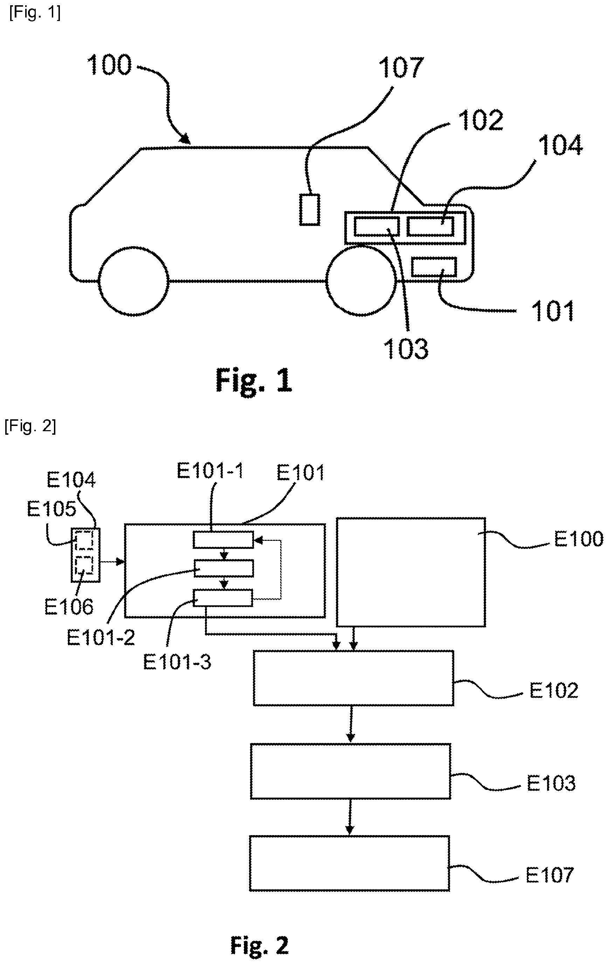

Dans la présente description, un véhicule 100 est, de préférence, un véhicule automobile tel que par exemple illustré en figure 1.

Dans la présente description, « ADC » est utilisé pour désigner un dispositif anti-démarrage codé, « BSI » pour désigner un boîtier de servitude intelligent, « CMM » pour désigner un calculateur moteur multifonctions tel un calculateur de contrôle d'un moteur thermique du véhicule 100 ou un calculateur contrôle moteur, « CAN » pour désigner un bus système série ou « controller aéra network » en langue anglaise, « MCUx » (« machine control unit » en langue anglaise) pour désigner un calculateur de contrôle d'un moteur de la machine électrique avant du véhicule 100 si x vaut 1 ou arrière du véhicule 100 si x vaut 2, « TCU » pour désigner un calculateur de contrôle de boîte de vitesse du véhicule 100 ou « traction control unit » en langue anglaise, et « IML » pour désigner un dispositif d'identification mains-libres du véhicule 100.

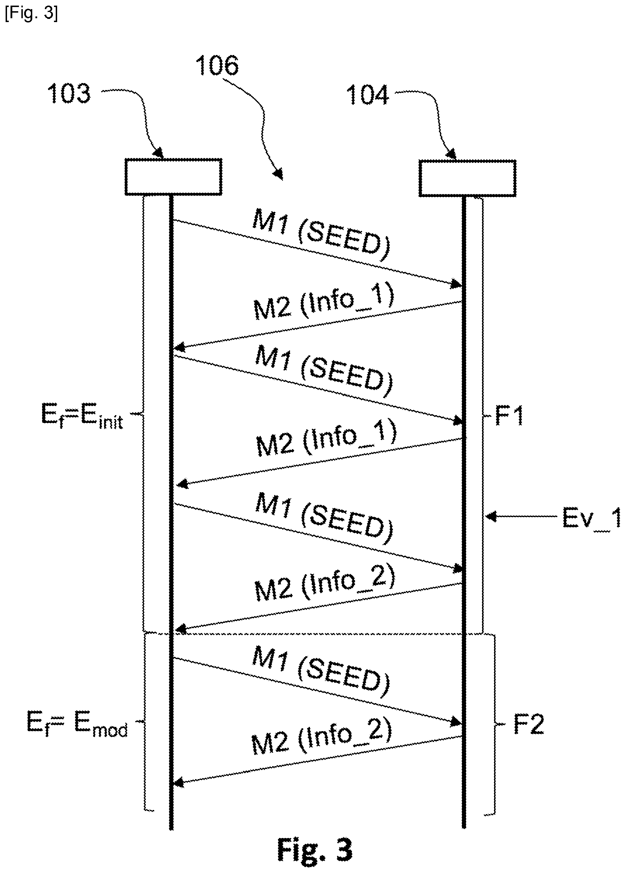

L'invention est relative à un procédé de commande du véhicule 100 dont un exemple d'enchaînement d'étapes est représenté en figure 2, et dont une réalisation particulière est représentée en figure 3. Un tel procédé de commande comporte une étape E100 de mise en oeuvre d'un premier mode F1 de fonctionnement du véhicule 100 pour lequel le véhicule 100 fonctionne au moins partiellement. Le premier mode F1 de fonctionnement est associé à un état E_{f} de fonctionnement du véhicule 100 autorisant ladite mise en oeuvre du premier mode F1 de fonctionnement. Sur la figure 3, l'état E_{f} de fonctionnement correspond à Eᵢₙᵢₜ lui permettant d'autoriser la mise en oeuvre du premier mode F1 de fonctionnement. Par ailleurs, le procédé de commande comporte une étape E101 de surveillance périodique de la réalisation d'un évènement Ev_1 au cours de l'étape E100 de mise en oeuvre du premier mode F1 de fonctionnement pour détecter l'évènement EV_1. Par « au cours de l'étape E100 de mise en oeuvre du premier mode F1 de fonctionnement », on entend ici que l'étape E101 de surveillance est mise en oeuvre alors que l'étape E100 de mise en oeuvre du premier mode F1 de fonctionnement s'exécute. Une telle étape E101 de surveillance permet, du fait de sa périodicité, d'assurer une transition fluide dans le cadre de l'activation d'un autre mode de fonctionnement du véhicule 100 permettant, par exemple, de changer le mode de fonctionnement courant du véhicule 100. Ainsi, on comprend que le procédé de commande comporte aussi une étape E102 de modification de l'état E_{f} de fonctionnement, déclenchée par la détection de l'évènement Ev_1 au cours de (c'est-à-dire par) l'étape E101 de surveillance, pour autoriser l'activation d'un deuxième mode F2 de fonctionnement du véhicule 100, puis une étape E103 d'activation du deuxième mode F2 de fonctionnement du véhicule 100 autorisé par l'état E_{f} de fonctionnement modifié. En figure 3, l'état E_{f} de fonctionnement modifié correspond à E_{mod}. Par ailleurs, il résulte de l'étape E102 de modification de l'état E_{f} de fonctionnement l'arrêt de la mise en oeuvre du premier mode F1 de fonctionnement : l'étape E100 est alors stoppée dès que l'état E_{f} de fonctionnement est modifié. Les étapes E100, E101, E102, E103 coopèrent donc en synergie pour assurer une fluidité adaptée aux changements de mode de fonctionnement et à leur mise en oeuvre puisque la surveillance de la réalisation de l'évènement Ev_1 permet de modifier le mode de fonctionnement du véhicule 100 en temps réel selon la périodicité de la surveillance. En ce sens, le procédé de commande est notamment un procédé de commande de l'état de fonctionnement du véhicule 100. On comprend de ce qui a été décrit ci-dessus que le procédé de commande comporte une étape E104 de réalisation de l'évènement Ev_1 (c'est-à-dire une étape E104 au terme de laquelle l'évènement s'est produit) permettant d'autoriser la mise en oeuvre de l'étape E102 de modification de l'état de fonctionnement.

Dans la présente description, par « le véhicule 100 fonctionne au moins partiellement », il est entendu que le véhicule 100 est activé au moins partiellement pour permettre la mise en oeuvre du mode de fonctionnement associé, notamment le premier mode F1 de fonctionnement. En particulier, lorsque le véhicule 100 fonctionne au moins partiellement, au moins une partie de sa chaîne de traction est activée. La chaîne de traction du véhicule 100 est considérée comme l'ensemble des éléments permettant de mettre en mouvement le véhicule 100, ainsi la chaîne de traction peut comporter un moteur 101 du véhicule 100 (figure 1).

Lorsque le véhicule 100 fonctionne, il est dit « mis en action », c'est-à-dire qu'il présente une dynamique soit partielle (aussi appelée dynamique restreinte) dans le cas où toutes ses fonctions ne sont pas activées, soit totale lorsque ses fonctions peuvent être toutes utilisées sans restriction par le conducteur du véhicule 100 (aussi appelé client). La dynamique est assurée par tout ou partie de la chaîne de traction du véhicule 100.

Le premier mode F1 de fonctionnement peut être un mode de fonctionnement pour lequel le véhicule 100 est partiellement fonctionnel, on parle alors aussi de mode de fonctionnement partiel ou restreint, notamment pour lequel la dynamique du véhicule 100 est restreinte.

Le deuxième mode F2 de fonctionnement peut être un mode de fonctionnement pour lequel le véhicule 100 est totalement fonctionnel, on parle alors aussi de mode de fonctionnement sans restriction ou sans contrainte, notamment pour lequel la dynamique du véhicule 100 est complète.

Bien entendu, l'inverse est aussi vrai dans le cadre où le premier mode F1 de fonctionnement peut être un mode de fonctionnement pour lequel le véhicule 100 est totalement fonctionnel et le deuxième mode F2 de fonctionnement peut être un mode de fonctionnement pour lequel le véhicule 100 est partiellement fonctionnel.

En ce sens, le procédé de commande peut permettre la mise à disposition fluide et transparente de la dynamique appropriée du véhicule 100 d'un mode de fonctionnement restreint vers un mode de fonctionnement sans contrainte, ou inversement.

Au sens, de la présente description un évènement peut correspondre à une situation pour laquelle une ou plusieurs conditions sont vérifiées, notamment par un calculateur dit « de gestion » du véhicule 100, c'est-à-dire à une situation particulière dans laquelle se trouve le véhicule 100 et devant entraîner une modification de son mode de fonctionnement courant.

Par « mode de fonctionnement restreint », il est entendu que le véhicule 100 n'est pas entièrement fonctionnel dans le sens où son fonctionnement est limité. Par exemple, dans le mode de fonctionnement restreint, le moteur 101 du véhicule 100 peut fonctionner de manière limitée, un tel moteur 101 avant ou arrière étant destiné à participer au déplacement du véhicule 100. L'état de fonctionnement associé au mode de fonctionnement restreint peut empêcher ou limiter le déplacement du véhicule 100.

A titre d'exemple, un mode de fonctionnement du véhicule 100 peut être choisi parmi un service de stationnement autonome du véhicule 100 permettant au véhicule 100 d'aller se garer seul sans intervention du conducteur, un service de pré-conditionnement thermique du véhicule 100 permettant par exemple de préchauffer le véhicule 100 à l'arrêt en vue de son utilisation ultérieure, et le fonctionnement du véhicule 100 sans restriction (c'est-à-dire que l'ensemble des fonctions du véhicule 100 sont disponibles). Ainsi, le premier mode F1 de fonctionnement peut être choisi parmi ces modes de fonctionnement, et le deuxième mode F2 de fonctionnement, différent du premier mode F1 de fonctionnement, peut aussi être choisi parmi ces modes de fonctionnement. Chacun de ces modes de fonctionnement est associé à l'état de fonctionnement qui adopte alors une valeur particulière permettant d'autoriser l'exécution du mode de fonctionnement concerné.

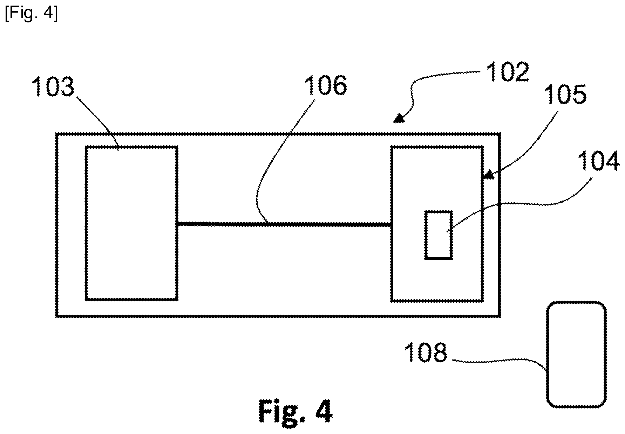

Le procédé de commande décrit dans la présente description peut être mis en oeuvre par un dispositif 102 d'immobilisation du véhicule 100 (figures 1 et 4), tel qu'un ADC. Ainsi, l'invention est aussi relative au dispositif 102 d'immobilisation comportant des moyens pour l'exécution des étapes du procédé de commande tel que décrit. De tels moyens sont décrits plus en détails ci-après. Notamment, le dispositif 102 d'immobilisation comporte/adopte l'état E_{f} de fonctionnement, et le dispositif 102 d'immobilisation est configuré pour :
- autoriser la mise en oeuvre du premier mode F1 de fonctionnement lorsque l'état E_{f} de fonctionnement adopte un état associé à ce mode F1 de fonctionnement,
- surveiller périodiquement la réalisation de l'évènement Ev_1 durant la mise en oeuvre du premier mode F1 de fonctionnement,
- modifier l'état E_{f} de fonctionnement lorsqu'il détecte, via la surveillance périodique qu'il réalise, l'évènement Ev_1 pour stopper la mise en oeuvre du premier mode F1 de fonctionnement et autoriser la mise en oeuvre du deuxième mode F2 de fonctionnement.

Selon une réalisation, par exemple illustrée en figures 1 à 3, le véhicule 100 comporte un premier calculateur 103 fournissant au moins une prestation au cours de l'étape E100 de mise en oeuvre du premier mode F1 de fonctionnement et un deuxième calculateur 104 assurant la gestion du véhicule 100 (le deuxième calculateur 104 correspondant au calculateur dit « de gestion » décrit ci-dessus). La prestation participe à l'exécution du premier mode F1 de fonctionnement. Dès lors, l'étape E101 de surveillance peut comporter : un envoi E101-1 périodique, de préférence à intervalles réguliers, d'un premier message M1 par le premier calculateur 103 au deuxième calculateur 104 ; à chaque réception de premier message M1 par le deuxième calculateur 104, un envoi E101-2 d'un deuxième message M2 émis par le deuxième calculateur 104 au premier calculateur 103 ; à chaque réception de deuxième message M2 par le premier calculateur 103, un traitement E101-3 dudit deuxième message M2 par le premier calculateur 103 déclenchant la mise en oeuvre de l'étape E102 de modification de l'état E_{f} de fonctionnement lorsque le deuxième message M2 indique que l'évènement Ev_1 s'est réalisé. Ceci présente l'avantage que l'état de E_{f} fonctionnement est directement modifié par le premier calculateur 103 qui effectue la ou les prestations permettant d'exécuter le premier mode F1 de fonctionnement : ce premier calculateur 103 peut alors, en fonction de l'état E_{f} de fonctionnement modifié, assurer rapidement, le cas échéant, une ou plusieurs prestations permettant d'exécuter le deuxième mode F2 de fonctionnement. Un autre avantage est que la surveillance périodique permet ici de maintenir le dialogue au cours du temps entre les premier et deuxième calculateurs 103, 104 pour permettre au premier calculateur 103 d'avoir la connaissance d'un changement de situation (survenance de l'évènement Ev_1) nécessitant qu'il adapte son fonctionnement notamment grâce à la modification de l'état Efde fonctionnement. Autrement dit, grâce à un tel procédé de commande, il n'y a pas besoin de réinitialiser le dialogue entre les premier et deuxième calculateurs 103, 104 par exemple en coupant le contact du véhicule 100 avant de le remettre. On comprend que l'état E_{f} de fonctionnement du véhicule 100 peut ici correspondre en fait à l'état E_{f} de fonctionnement du premier calculateur 103.

De préférence, l'envoi périodique du premier message M1 est tel que le premier message M1 est envoyé par exemple toutes les secondes au deuxième calculateur 104 afin de permettre la détection au plus tôt, par le premier calculateur 103, de la réalisation de l'évènement.

Dans la présente description, chaque prestation fournie par le premier calculateur 103 est adaptée à la dynamique souhaitée du véhicule 100. Par exemple la prestation peut correspondre à la fourniture de consignes aux injecteurs du moteur 101 et/ou au pilotage des bobines d'allumage du moteur 101 pour exécuter le mode de fonctionnement concerné, par exemple le premier mode F1 de fonctionnement. Par exemple, si le premier mode F1 de fonctionnement est le service de pré-conditionnement thermique, le premier calculateur 103 peut envoyer des consignes aux injecteurs et/ou piloter les bobines d'allumage tant que la vitesse du véhicule 100 est nulle. Selon un autre exemple, si le premier mode F1 de fonctionnement est le service de stationnement autonome, le premier calculateur 103 peut envoyer des consignes aux injecteurs et/ou piloter les bobines d'allumage tout en limitant la vitesse du véhicule 100 par exemple sous un seuil de 30km/h. Ces deux exemples permettent d'assurer la sécurité du véhicule 100 notamment pour éviter son vol.

Avantageusement (figure 3), chaque deuxième message M2 envoyé par le deuxième calculateur 104 est élaboré par le deuxième calculateur 104, notamment après réception d'un premier message M1 correspondant, de telle sorte que : préalablement à la réalisation de l'événement Ev_1 (c'est-à-dire avant l'étape E104), le deuxième message M2 comporte une première information Info_1 représentative de l'état E_{f} de fonctionnement associé au premier mode F1 de fonctionnement ; lorsque l'évènement Ev_1 s'est réalisé (c'est-à-dire après l'étape E104), le deuxième message M2 comporte une deuxième information Info_2 représentative de l'état E_{f} de fonctionnement autorisant l'activation du deuxième mode F2 de fonctionnement. En ce sens, le deuxième calculateur 104 est notamment tel qu'il est configuré pour vérifier la ou les conditions associées à l'évènement Ev_1, et il peut générer/élaborer le deuxième message M2 à envoyer en y plaçant l'information Info_1 ou Info_2 adéquate. Le mécanisme d'échange de messages prévu dans le présent paragraphe permet d'informer rapidement le premier calculateur 103 d'un changement de situation relative au véhicule 100 pour adapter rapidement son mode de fonctionnement en le changeant, notamment en activant le deuxième mode F2 de fonctionnement et en désactivant le premier mode F1 de fonctionnement.

En particulier, le mécanisme de dialogue entre le premier calculateur 103 et le deuxième calculateur 104 implémente des clés chiffrées pour assurer la sécurité du dialogue et éviter le vol du véhicule 100. En fait, chaque premier message M1 peut comporter une graine aléatoire « SEED » (figure 3) générée par le premier calculateur 103 notamment avant chaque envoi de premier message M1 (les graines aléatoires peuvent alors être différentes pour chaque envoi de premier message M1). Lorsque le deuxième calculateur 104 reçoit le premier message M1, il utilise la graine aléatoire contenue dans le premier message M1 pour générer une clé chiffrée formant l'information à envoyer au premier calculateur 103 via un deuxième message M2 correspondant. Avant réalisation de l'évènement Ev_1, chaque clé chiffrée envoyée par le deuxième calculateur 104 au premier calculateur 103 est représentative de l'état de fonctionnement associé au premier mode F1 de fonctionnement d'où il résulte que le premier calculateur 103 conserve l'état de fonctionnement courant. Après réalisation de l'évènement Ev_1, la clé chiffrée envoyée par le deuxième calculateur 104 au premier calculateur 103 est représentative de l'état que doit présenter l'état E_{f} de fonctionnement pour autoriser la mise en oeuvre du deuxième mode F2 de fonctionnement, et dans ce cas le traitement de la clé chiffrée reçue par le premier calculateur 103 permet de modifier l'état E_{f} de fonctionnement courant pour autoriser l'activation du deuxième mode F2 de fonctionnement.

Le deuxième calculateur 104 est, de préférence un calculateur d'un BSI 105 du véhicule 100 (figure 4).

Le premier calculateur 103 peut être choisi parmi : un CMM, un MCU1, un MCU2, un TCU. Par ailleurs, le véhicule 100 peut comporter plusieurs premiers calculateurs 103 choisis parmi la liste ci-dessus assurant chacun une ou des prestation permettant l'exécution d'un mode de fonctionnement correspondant en pilotant, le cas échéant, un moteur ou une boîte de vitesse faisant partie de la chaîne de traction du véhicule 100. Dans ce cas, ce qui s'applique à l'un des premiers calculateurs 103 peut s'appliquer à chacun des premiers calculateurs 103.

De préférence, le premier calculateur 103 et le deuxième calculateur 104 dialoguent en utilisant le réseau, ou bus, CAN 106 (figures 3 et 4). Le maintien du dialogue, c'est-à-dire le mécanisme d'échange des premiers et deuxièmes messages, entre le premier calculateur 103 et le deuxième calculateur 104 via le réseau CAN permet d'assurer la fluidité recherchée lors du passage du premier mode F1 de fonctionnement au deuxième mode F2 de fonctionnement.

Le dispositif 102 d'immobilisation peut comporter, comme illustré en figure 4, le BSI 105, le premier calculateur 103, le deuxième calculateur 104 et le réseau CAN 106.

Ainsi, il est compris que selon une réalisation particulière de l'invention, on cherche à maintenir dans le temps le dialogue entre le CMM et le calculateur du BSI via le réseau CAN pour permettre la mise à jour en temps réel de la dynamique du véhicule adaptée aux besoins du client.

Selon une réalisation, l'état E_{f} de fonctionnement associé au premier mode F1 de fonctionnement est un état de déverrouillage partiel tel que le véhicule 100 fonctionne de manière restreinte lors de la mise en oeuvre du premier mode F1 de fonctionnement. Selon cette réalisation, le procédé de commande comporte une étape E105 d'authentification d'un dispositif 107 d'identification (figures 1 et 2) du véhicule 100 d'où il résulte la réalisation de l'évènement Ev_1 (étape E104). Dès lors, l'étape E102 de modification de l'état E_{f} de fonctionnement assure le passage de l'état E_{f} de fonctionnement à un état E₁ de déverrouillage total du véhicule 100 autorisant le fonctionnement du véhicule 100 sans restriction. Autrement dit, l'état E_{f} de fonctionnement adopte, après l'étape E102 de modification, l'état E₁ de déverrouillage total. L'étape E105 d'authentification est notamment mise en oeuvre au cours de l'étape E100 de mise en oeuvre du premier mode F1 de fonctionnement. Ceci présente l'avantage de déverrouiller automatiquement les fonctions du véhicule 100 lorsque le dispositif 107 d'identification est authentifié. Le dispositif 107 d'identification est notamment tel qu'il s'authentifie, de préférence automatiquement, au deuxième calculateur 104, par exemple lorsqu'il est présent dans l'habitacle du véhicule 100 ce qui est représentatif d'une situation où le conducteur souhaite utiliser son véhicule 100. Selon cette réalisation, le premier mode F1 de fonctionnement peut être le service de pré-conditionnement thermique du véhicule ou le service de stationnement autonome du véhicule 100 qui procurent avantageusement des fonctions supplémentaires au véhicule 100. On comprend que selon cette réalisation, l'évènement Ev_1 est considéré comme s'étant réalisé lorsque la condition d'authentification du dispositif 107 d'identification a été vérifiée, notamment par le deuxième calculateur 104.

Selon une autre réalisation, l'état E_{f} de fonctionnement associé au premier mode F1 de fonctionnement est l'état E₁ de déverrouillage total autorisant le fonctionnement sans restriction du véhicule 100. Le procédé de commande peut alors comporter une étape E106 (figure 2) de demande d'activation du deuxième mode F2 de fonctionnement. On dit alors que l'évènement Ev_1 comporte l'étape E106 de demande d'activation du deuxième mode F2 de fonctionnement dans le sens où l'étape E106 est une condition de réalisation de l'évènement Ev_1. L'avantage est ici de permettre facilement l'exécution du deuxième mode F2 de fonctionnement sur requête, par exemple du conducteur. De préférence, le dispositif 107 d'identification du véhicule 100 étant présent dans l'habitacle du véhicule 100 au cours de l'étape de mise en oeuvre du premier mode F1 de fonctionnement, l'évènement Ev_1 comporte le retrait du dispositif 107 d'identification de l'habitacle. En ce sens, la réalisation de l'évènement Ev_1 est ici soumise à la vérification, de préférence par le deuxième calculateur 104, de deux conditions à savoir l'étape E106 et le retrait du dispositif 107 d'identification de l'habitacle. Ceci permet de passer aisément d'une situation pour laquelle le conducteur conduit le véhicule 100, ou est simplement présent dans le véhicule 100 avec son dispositif 107 d'identification, à une situation où il sort de son véhicule 100 et active un service particulier tel que le service de stationnement autonome ou le service de pré-conditionnement thermique. Selon un perfectionnement de cette réalisation, le deuxième mode F2 de fonctionnement est un service de stationnement autonome du véhicule 100 ou un service de pré-conditionnement thermique du véhicule 100, et au terme de la mise en oeuvre de ce service, le procédé de commande comporte une étape E107 d'arrêt (figure 2) du deuxième mode de fonctionnement et une étape de changement de l'état de fonctionnement vers un état E₀ verrouillé du véhicule assurant l'immobilisation du véhicule. Ceci présente l'avantage de sécuriser le véhicule 100 au terme de l'exécution de ce service.

En figure 2, les étapes E105 et E106 sont représentées en pointillé car elles sont exclusives, leur mise en oeuvre dépendant type du premier mode de fonctionnement.

Le dispositif 107 d'identification peut être une clé mécanique, un IML, ou un téléphone intelligent (« smartphone » en langue anglaise).

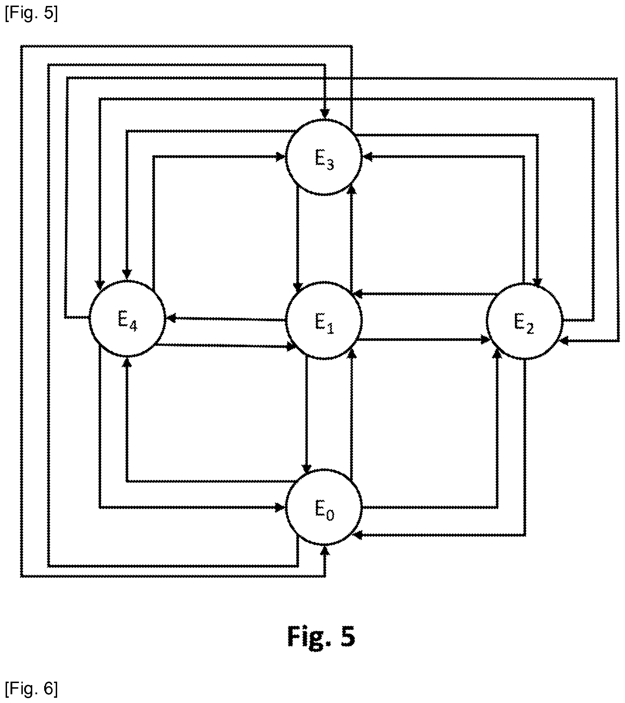

Il résulte de ce qui a été décrit ci-dessus que l'état E_{f} de fonctionnement peut adopter n'importe lequel des états suivants, et représentés à titre d'exemple en figure 5 :
- l'état E₁ de déverrouillage total autorisant la mise en oeuvre d'un mode de fonctionnement du véhicule 100 dépourvu de restriction, c'est-à-dire que le mode de fonctionnement associé à l'état E₁ de déverrouillage total permet l'accès à la totalité des fonctionnalités du véhicule 100 : la dynamique complète du véhicule est disponible,
- l'état E₀ verrouillé permettant d'assurer l'immobilisation du véhicule 100,
- chacun des états E₂, E₃, E₄ de déverrouillage partiel autorisant chacun la mise en oeuvre d'un mode de fonctionnement associé audit état de déverrouillage partiel et pour lequel le véhicule 100 fonctionne de manière restreinte afin d'assurer un service lié audit mode de fonctionnement : chaque état de déverrouillage partiel autorise donc une dynamique restreinte du véhicule 100.

De préférence, chaque mode de fonctionnement associé à l'état E_{f} de fonctionnement adoptant un état de déverrouillage partiel correspondant est un service dit « connecté ». En ce sens l'étape E106 de demande d'activation du deuxième mode F2 de fonctionnement, ou plus généralement de ce service connecté, peut être réalisée à l'aide d'un dispositif 108 de commande à distance (Figure 4) configuré pour envoyer une instruction de commande au véhicule 100, notamment au deuxième calculateur 104, dont la réception permet de vérifier une condition liée à la réalisation de l'évènement Ev_1. Le dispositif 108 de commande à distance peut être un « smartphone ». Le dispositif 108 de commande à distance peut alors être distant du véhicule 100 lorsqu'il envoie l'instruction de commande au véhicule 100 qui comporte alors un récepteur adapté.

Sur la figure 5, chaque flèche partant d'un état et pointant sur un autre état représente une modification possible de l'état E_{f} de fonctionnement. Ici, l'état E₂ de déverrouillage partiel est un état autorisant la mise en oeuvre du service de pré-conditionnement thermique du véhicule 100, l'état E₃ de déverrouillage partiel est un état autorisant la mise en oeuvre du service de stationnement autonome, l'état E₄ de déverrouillage partiel est un état autorisant la mise en oeuvre d'un service additionnel impliquant une dynamique restreinte du véhicule 100. Si dans le premier mode F1 de fonctionnement l'état E_{f} de fonctionnement est l'un quelconque des états E₂, E₃, E₄ de déverrouillage partiel, et que l'évènement est l'authentification du dispositif 107 d'identification du véhicule 100, alors cette authentification permet le passage de l'état de déverrouillage partiel concerné à l'état E₁ de déverrouillage total. Si dans le premier mode F1 de fonctionnement l'état E_{f} de fonctionnement est l'état E₁ de déverrouillage total, et que l'évènement correspond à une perte de l'authentification du dispositif 107 d'identification du véhicule 100 et à une demande d'activation d'un service associé à l'un quelconque des états de déverrouillage partiel, alors l'état E_{f} de fonctionnement passe de l'état E₁ de déverrouillage total à l'état E₂, E₃, E₄ de déverrouillage partiel autorisant le service dont l'activation a été demandée. Lorsque l'état E_{f} de fonctionnement est dans l'un quelconque des états E₂, E₃, E₄ de déverrouillage partiel et que l'évènement correspond à une demande d'activation d'un service associé à un autre des états E₂, E₃, E₄ de déverrouillage partiel alors que le dispositif 107 d'identification du véhicule 100 n'est pas authentifié, alors l'état E_{f} de fonctionnement passe à cet autre des états de déverrouillage partiel. Lorsque l'état E_{f} de fonctionnement est dans l'un quelconque des états E₂, E₃, E₄ de déverrouillage partiel et que l'évènement correspond à l'arrêt du service autorisé par l'état E_{f} de fonctionnement, alors l'état E_{f} de fonctionnement peut passer à l'état E₀ verrouillé. Lorsque l'état E_{f} de fonctionnement est l'état E₀ verrouillé, l'authentification du dispositif 107 d'identification du véhicule 100 correspond à la réalisation d'un évènement permettant le passage de l'état de fonctionnement à l'état E1 de déverrouillage total. Lorsque l'état de fonctionnement est l'état E₀ verrouillé, la demande d'activation de n'importe lequel des services associés aux états de déverrouillage partiel, alors que le dispositif d'identification n'est pas authentifié, permet le passage de l'état E_{f} de fonctionnement à l'état de déverrouillage partiel autorisant le service dont l'activation est demandée. Par ailleurs, Lorsque l'état de fonctionnement est l'état E1 de déverrouillage total et que le dispositif 107 d'identification quitte le véhicule 100 sans qu'aucune demande d'activation d'un autre service ne soit réalisée, l'état de fonctionnement passe à l'état E₀ verrouillé.

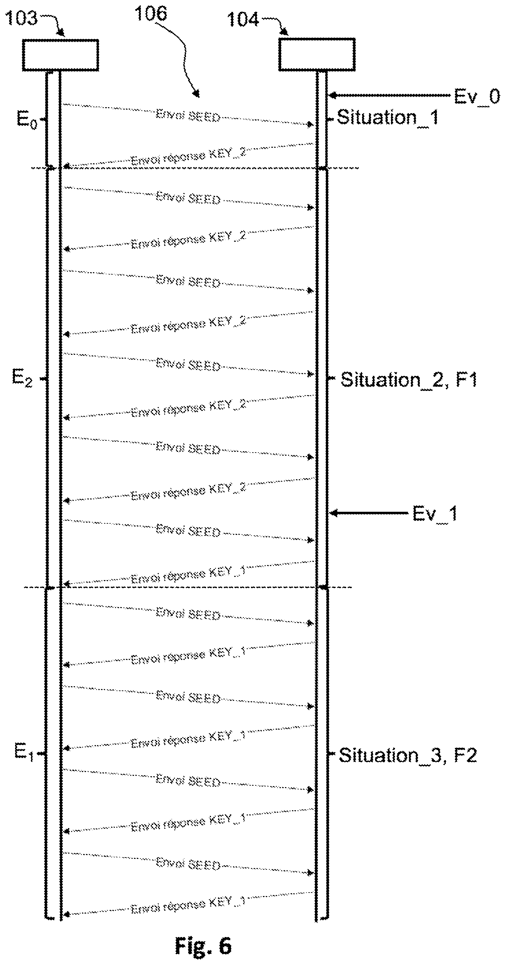

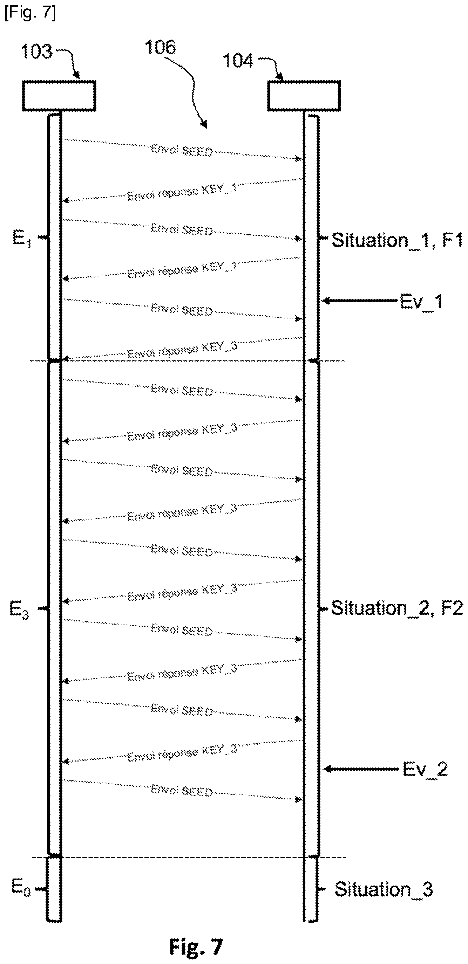

Il est par la suite décrit deux exemples particuliers (figures 6 et 7) pour lesquels le premier calculateur 103 est un CMM et le deuxième calculateur 104 est un calculateur du BSI qui échangent des messages sur le réseau CAN 106. Sur ces figures 6 et 7, « Envoi SEED » correspond à un premier message M1 et « Envoi réponse KEY_X » avec X un nombre entier correspond à un deuxième message M2.

Selon l'exemple particulier de la figure 6, le premier mode F1 de fonctionnement est le service de pré-conditionnement thermique du véhicule 100, par exemple mis en oeuvre lorsque ce véhicule 100 est stationné. Tout d'abord (« Situation_1 »), l'état de fonctionnement du CMM adopte l'état E₀ verrouillé pour lequel la dynamique du véhicule 100 est indisponible (le CMM est éteint), ce qui se traduit par une absence de consignes aux bobines d'allumage du moteur du véhicule 100 et/ou en l'absence de consignes aux injecteurs du moteur du véhicule 100. A l'activation « Ev_0 » du service de pré-conditionnement thermique, de préférence via le dispositif 108 de commande à distance, le CMM se réveille et envoie un nombre aléatoire « Envoi SEED » généré par le CMM, ce nombre aléatoire est envoyé via le réseau CAN 106 au calculateur du BSI. En fait, ici à la réception par le BSI d'une demande d'activation du service de pré-conditionnement thermique, le BSI se charge de réveiller le CMM via le pilotage de la ligne RCD (Réveil Commandé à Distance) alimentant notamment le CMM. Le calculateur du BSI répond « Envoi réponse KEY_2 » au CMM via le réseau CAN 106 en envoyant au CMM la clé chiffrée « KEY_2 », notamment générée en utilisant le nombre aléatoire reçu pour des raisons de sécurité. A la réception de « KEY_2 », le CMM bascule dans l'état E2 de déverrouillage partiel autorisant l'exécution du service de pré-conditionnement thermique, de préférence le véhicule 100 est alors mis en action tant que la vitesse du véhicule 100 est nulle (« Situation_2 »). Dans cette « Situation_2 », la dynamique du véhicule 100 est restreinte, par exemple en permettant le pilotage des bobines d'allumage du moteur du véhicule 100 et/ou l'envoi de consignes aux injecteurs du moteur du véhicule 100 que si la vitesse du véhicule 100 est nulle. Ensuite, tant que l'état E_{f} de fonctionnement du CMM se trouve dans l'état E2 de déverrouillage partiel, un nombre aléatoire « SEED » est généré périodiquement par le CMM (par exemple une fois par seconde) puis est envoyé « Envoi SEED » via le réseau CAN 106 au calculateur du BSI. Ensuite, le calculateur du BSI répond « Envoi réponse KEY_2 » au CMM via le réseau CAN en envoyant au CMM la clé cryptée « KEY_2 » à chaque nombre aléatoire « SEED » reçu périodiquement tant qu'aucun évènement identifié par le calculateur du BSI n'indique que le premier mode F1 de fonctionnement doit changer. Tant que le CMM reçoit périodiquement « KEY_2 », le CMM maintient son état E_{f} de fonctionnement à l'état E₂ de déverrouillage partiel. Si l'évènement Ev_1 suivant se réalise : le conducteur pénètre dans son véhicule 100 muni de son IML durant l'exécution du service de pré-conditionnement thermique, alors le calculateur du BSI authentifie l'IML et répond « Envoi réponse KEY_1 » au CMM via le réseau CAN 106 en envoyant au CMM la clé chiffrée « KEY_1 » en réponse à la réception du nombre aléatoire « SEED » suivant cet évènement Ev_1. A la réception de « KEY_1 », le CMM détecte que l'évènement Ev_1 s'est réalisé et bascule dans l'état E₁ de déverrouillage total qui permet au conducteur de disposer de la dynamique complète de son véhicule (« Situation_3 ») permettant ainsi d'activer le deuxième mode F2 de fonctionnement. Ici la dynamique complète permet de piloter les bobines d'allumage du moteur du véhicule 100 et/ou d'envoyer des consignes aux injecteurs du moteur du véhicule 100 sans aucune restriction. Au cours de la « Situation_3 » le dialogue entre le CMM et le calculateur du BSI continu (échanges « Envoi SEED » et « Envoi réponse KEY_1 »), par exemple pour permettre la détection d'un autre évènement qui permettra de modifier encore l'état E_{f} de fonctionnement. Alternativement (non représenté), si l'évènement correspond à la fin de l'exécution du service de pré-conditionnement thermique, le calculateur du BSI cesse, en l'absence d'autre sollicitation de la dynamique du véhicule 100 de la part du conducteur, de répondre au CMM qui dans ce cas rebascule dans l'état E₀ verrouillé.

Il est à présent décrit l'exemple particulier illustré en figure 7 pour lequel le premier mode F1 de fonctionnement est tel que l'état E_{f} de fonctionnement est l'état E₁ déverrouillé autorisant la dynamique complète du véhicule 100. Dans ce premier mode F1 de fonctionnement la situation est initialement la suivante (« Situation_1 ») : le conducteur conduit le véhicule 100, par exemple en effectuant un trajet quelconque, il en résulte que l'IML est authentifié par le calculateur du BSI : l'IML est donc dans l'habitacle du véhicule 100. Ici, l'état E_{f} de fonctionnement correspond à l'état E₁ de déverrouillage total permettant au conducteur de disposer de la dynamique complète de son véhicule 100 (« Situation_1 »). Ici la dynamique complète permet de piloter les bobines d'allumage du moteur du véhicule 100 et/ou d'envoyer des consignes aux injecteurs du moteur du véhicule 100 sans aucune restriction. Ensuite, le conducteur va chercher à activer en tant que deuxième mode F2 de fonctionnement le service de stationnement autonome de son véhicule 100. Tant que le conducteur est dans son véhicule 100 et que l'IML est authentifié par le calculateur du BSI, le CMM est maintenu dans l'état E₁ de déverrouillage total. Tant que le CMM se trouve dans l'état E₁ de déverrouillage total, un nombre aléatoire « SEED » est généré périodiquement par le CMM (par exemple une fois par seconde) et est envoyé « Envoi SEED » via le réseau CAN 106 au calculateur du BSI. Tant que l'IML est authentifié, le BSI répond « Envoi réponse KEY_1 », à chaque nombre aléatoire "SEED" reçu périodiquement, au CMM via le réseau CAN 106 en envoyant au CMM la clé chiffrée « KEY_1 » qu'il a notamment généré en utilisant le nombre aléatoire pour assurer la sécurité de l'échange entre le CMM et le calculateur du BSI. Si le conducteur sort de son véhicule 100 avec l'IML (perte de l'authentification par le calculateur du BSI) et active le service de stationnement autonome auprès du calculateur du BSI, alors l'évènement Ev_1 est réalisé d'où il résulte que le calculateur du BSI répond « Envoi réponse KEY_3 » au CMM via le réseau CAN en envoyant au CMM la clé chiffrée « KEY_3 » suite à la réception du nombre aléatoire « SEED » consécutive à la réalisation de l'évènement Ev_1. A la réception de « KEY_3 », le CMM modifie son état E_{f} de fonctionnement en le basculant dans l'état E₃ de déverrouillage partiel, ceci permettant la mise à disposition d'une dynamique restreinte du véhicule 100 pour l'exécution du service stationnement autonome en tant que deuxième mode F2 de fonctionnement (« Situation_2 » de la figure 7). Par exemple, lors de la mise en oeuvre du service de stationnement autonome, la dynamique retreinte du véhicule 100 autorise un pilotage des bobines d'allumage du moteur du véhicule 100 et/ou un envoi de consignes aux injecteurs du moteur du véhicule 100 ne permettant pas au véhicule 100 de franchir un seuil de vitesse, par exemple de 30km/h pour éviter le vol du véhicule. Une fois le véhicule stationné « Ev_2 », le service de stationnement autonome prend fin : le calculateur du BSI cesse de répondre au CMM, d'où il résulte que l'état E_{f} de fonctionnement du CMM passe à l'état E₀ verrouillé pour lequel la dynamique du véhicule 100 est indisponible, ce qui se traduit par une absence de consignes aux bobines d'allumage et/ou en l'absence de consignes aux injecteurs ( « Situation_3 »).

Bien entendu, il est aussi compris que la présente invention s'applique à un véhicule 100, notamment automobile, comportant le dispositif 102 d'immobilisation tel que décrit (figures 1 et 5). Les avantages d'un tel véhicule 100 découlent de ceux décrits ci-avant en combinaison avec le procédé de commande et le dispositif 102 d'immobilisation.

Tout ce qui s'applique au procédé de commande peut s'appliquer au dispositif 102 d'immobilisation ou inversement.

La présente invention permet au conducteur d'obtenir le plein usage de son véhicule 100 même en cas de service, notamment connecté, en cours d'exécution, et ce sans le solliciter par exemple en effectuant une coupure puis une remise du contact. De même, l'exécution d'un service connecté est possible dès que le conducteur sort de son véhicule 100, par exemple en activant ce service à l'aide du dispositif 108 de commande à distance. L'inviolabilité du véhicule 100 au cours de l'exécution des différents modes de fonctionnement demeure préservée grâce au dispositif d'immobilisation qui peut le cas échéant limiter les fonctionnalités du véhicule 100. Les services connectés décrits sont simples à lancer et présentent un confort à l'utilisation pour le conducteur (aucune manipulation indésirable requise de sa part pour lancer ces services connectés hors une activation par exemple via le dispositif 108 de commande, et ce quelle que soit la situation du véhicule 100). Un autre avantage est que le surcoût d'un véhicule 100 pour implanter le procédé de commande est limité car le procédé de commande peut être implanté en impactant les logiciels embarqués dans les premier et deuxième calculateurs 103, 104 déjà présents dans le véhicule 100: l'architecture des véhicules existants ne doit pas être modifiée en profondeur pour y intégrer la présente invention.

Ainsi, la présente invention peut être appliquée en partant d'architectures électriques/électroniques existantes tout en permettant au dispositif d'immobilisation de garantir l'inviolabilité du véhicule 100 et tout en étant compatible avec des services connectés. Les échanges périodiques des premiers et deuxièmes messages M1, M2 permettent, le cas échéant, de déverrouiller partiellement les calculateurs CMM/MCUx/TCU et de restreindre leurs prestations contribuant à la dynamique du véhicule 100 suivant le service connecté en cours d'exécution, puis, en cas d'authentification d'un IML par le calculateur du BSI durant l'exécution de ce service connecté et sans aucune action supplémentaire du client, de déverrouiller totalement les calculateurs CMM/MCUx/TCU et de les libérer de toute restriction de prestation. Inversement, ces mêmes échanges périodiques des premiers et deuxièmes messages M1, M2 permettent, le cas échéant, de déverrouiller totalement les calculateurs CMM/MCUx/TCU en cas d'authentification d'un IML par le BSI, puis de déverrouiller partiellement ces calculateurs CMM/MCUx/TCU et de restreindre leurs prestations si jamais le conducteur choisit d'exécuter un service connecté après avoir roulé avec son véhicule.

La présente invention trouve une application industrielle dans le domaine des véhicules, notamment automobiles, dans sens où le dispositif 102 d'immobilisation peut être selon l'invention intégré dans le véhicule 100.

## Revendications

1. Procédé de commande d'un véhicule (100), ledit procédé de commande comportant une étape (E100) de mise en oeuvre d'un premier mode (F1) de fonctionnement du véhicule (100) pour lequel le véhicule (100) fonctionne au moins partiellement, le premier mode (F1) de fonctionnement étant associé à un état de fonctionnement (Ef) du véhicule (100) autorisant ladite mise en oeuvre du premier mode (F1) de fonctionnement, ledit procédé comporte :
- une étape (E101) de surveillance périodique de la réalisation d'un évènement (Ev_1) au cours de l'étape (E100) de mise en oeuvre du premier mode (F1) de fonctionnement pour détecter l'évènement (Ev_1),
- une étape (E102) de modification de l'état (Ef) de fonctionnement, déclenchée par la détection de l'évènement (Ev_1), pour autoriser l'activation d'un deuxième mode (F2) de fonctionnement du véhicule (100) associé à l'état (Ef) de fonctionnement modifié,
- une étape (E103) d'activation du deuxième mode (F2) de fonctionnement du véhicule autorisé par l'état (Ef) de fonctionnement modifié
et en ce que le véhicule (100) comporte un premier calculateur (103) fournissant au moins une prestation au cours de l'étape (E100) de mise en oeuvre du premier mode (F1) de fonctionnement et un deuxième calculateur (104) assurant la gestion du véhicule (100), et en ce que l'étape (E101) de surveillance comporte :
- un envoi (E101-1) périodique, de préférence à intervalles réguliers, d'un premier message (M1) par le premier calculateur (103) au deuxième calculateur (104),
- à chaque réception de premier message (M1) par le deuxième calculateur (104), un envoi (E101-2) d'un deuxième message (M2) émis par le deuxième calculateur (104) au premier calculateur (103),
- à chaque réception de deuxième message (M2) par le premier calculateur (103), un traitement (E101-3) dudit deuxième message (M2) par le premier calculateur (103) déclenchant la mise en oeuvre de l'étape (E102) de modification de l'état (Ef) de fonctionnement lorsque le deuxième message (M2) indique que l'évènement (Ev_1) s'est réalisé caractérisé en ce
chaque premier message M1 comportant une graine aléatoire générée par le premier calculateur 103, lorsque le deuxième calculateur 104 reçoit le premier message M1, il utilise la graine aléatoire contenue dans le premier message M1 pour générer une clé chiffrée formant une information à envoyer au premier calculateur 103 via un deuxième message M2 correspondant.

2. Procédé de commande selon la revendication précédente, **caractérisé en ce que** chaque deuxième message (M2) envoyé par le deuxième calculateur (104) est élaboré par le deuxième calculateur (104) de telle sorte que :
- préalablement à la réalisation de l'événement (Ev_1), le deuxième message (M2) comporte une première information (Info_1) représentative de l'état (Ef) de fonctionnement associé au premier mode (F1) de fonctionnement,
- lorsque l'évènement (Ev_1) s'est réalisé, le deuxième message (M2) comporte une deuxième information (Info_2) représentative de l'état (Ef) de fonctionnement autorisant l'activation du deuxième mode (F2) de fonctionnement.

3. Procédé de commande selon l'une quelconque des revendications précédentes, **caractérisé en ce que** :
- l'état (Ef) de fonctionnement associé au premier mode (F1) de fonctionnement est un état de déverrouillage partiel tel que le véhicule (100) fonctionne de manière restreinte lors de la mise en oeuvre du premier mode (F1) de fonctionnement,
- le procédé de commande comporte une étape (E105) d'authentification d'un dispositif (107) d'identification du véhicule (100) d'où il résulte la réalisation de l'évènement (Ev_1),
- l'étape (E102) de modification de l'état (Ef) de fonctionnement assure le passage de l'état (Ef) de fonctionnement à un état (E1) de déverrouillage total du véhicule (100) autorisant le fonctionnement du véhicule (100) sans restriction.

4. Procédé de commande selon la revendication précédente, **caractérisé en ce que** le premier mode (F1) de fonctionnement est un service de pré-conditionnement thermique du véhicule (100), ou **en ce que** le premier mode (F1) de fonctionnement est un service de stationnement autonome du véhicule (100).

5. Procédé de commande selon l'une quelconque des revendications 1 à 2, **caractérisé en ce que** :
- l'état (Ef) de fonctionnement associé au premier mode (F1) de fonctionnement est un état (E₁) de déverrouillage total autorisant le fonctionnement sans restriction du véhicule (100),
- le procédé de commande comporte une étape (E106) de demande d'activation du deuxième mode (F2) de fonctionnement,
- l'évènement (Ev_1) comporte l'étape (E106) de demande d'activation du deuxième mode (F2) de fonctionnement.

6. Procédé de commande selon la revendication précédente, **caractérisé en ce qu'**un dispositif (107) d'identification du véhicule (100) étant présent dans un habitacle du véhicule (100) au cours de l'étape de mise en oeuvre du premier mode (F1) de fonctionnement, l'évènement (Ev_1) comporte le retrait du dispositif (107) d'identification de l'habitacle.

7. Procédé de commande selon l'une quelconque des revendications 5 à 6, **caractérisé en ce que** le deuxième mode (F2) de fonctionnement est un service de stationnement autonome du véhicule (100) ou un service de pré-conditionnement thermique du véhicule (100), et **en ce qu'**au terme de la mise en oeuvre de ce service, le procédé de commande comporte une étape (E107) d'arrêt du deuxième mode de fonctionnement et une étape de changement de l'état (Ef) de fonctionnement vers un état (E0) verrouillé du véhicule (100) assurant l'immobilisation du véhicule (100).

8. Dispositif (102) d'immobilisation pour véhicule (100), **caractérisé en ce qu'**il comporte des moyens pour l'exécution des étapes du procédé de commande selon l'une quelconque des revendications précédentes.

9. Véhicule (100), **caractérisé en ce qu'**il comporte un dispositif (102) d'immobilisation selon la revendication précédente.

## Patentansprüche

1. Verfahren zum Steuern eines Fahrzeugs (100), wobei das Steuerverfahren einen Schritt (E100) des Implementierens eines ersten Betriebsmodus (F1) des Fahrzeugs (100) umfasst, für den das Fahrzeug (100) zumindest teilweise arbeitet, nämlich den ersten wobei der Betriebsmodus (F1) einem Betriebszustand (Ef) des Fahrzeugs (100) zugeordnet ist, der die Implementierung des ersten Betriebsmodus (F1) autorisiert, wobei das Verfahren Folgendes umfasst:
- einen Schritt (E101) der periodischen Überwachung des Eintretens eines Ereignisses (Ev_1) während des Schritts (E100) der Implementierung des ersten Betriebsmodus (F1) zur Erkennung des Ereignisses (Ev_1),
- einen Schritt (E102) der Änderung des Betriebszustands (Ef), ausgelöst durch die Erkennung des Ereignisses (Ev_1), um die Aktivierung eines zweiten Betriebsmodus (F2) des Fahrzeugs (100) zu genehmigen, der mit der Änderung verbunden ist Betriebszustand (Ef),
- einen Schritt (E103) der Aktivierung des zweiten Betriebsmodus (F2) des Fahrzeugs, der durch den geänderten Betriebszustand (Ef) autorisiert ist.
und dass das Fahrzeug (100) einen ersten Computer (103) umfasst, der während des Schritts (E100) der Implementierung des ersten Betriebsmodus (F1) mindestens einen Dienst bereitstellt, und einen zweiten Computer (104), der die Verwaltung des Fahrzeugs gewährleistet (100) und dass der Überwachungsschritt (E101) umfasst:
- ein periodisches Senden (E101-1), vorzugsweise in regelmäßigen Abständen, einer ersten Nachricht (M1) durch den ersten Computer (103) an den zweiten Computer (104),
- jedes Mal, wenn eine erste Nachricht (M1) vom zweiten Computer (104) empfangen wird, ein Senden (E101-2) einer vom zweiten Computer (104) gesendeten zweiten Nachricht (M2) an den ersten Computer (103),
- bei jedem Empfang einer zweiten Nachricht (M2) durch den ersten Computer (103) die Verarbeitung (E101-3) der zweiten Nachricht (M2) durch den ersten Computer (103), die die Durchführung der Änderung des Schrittes (E102) auslöst Betriebszustand (Ef), wenn die zweite Nachricht (M2) angibt, dass das Ereignis (Ev_1) eingetreten ist, **dadurch gekennzeichnet, dass** jede erste Nachricht M1 einen zufälligen Startwert umfasst, der vom ersten Computer 103 generiert wird, wenn der zweite Rechner 104 die erste Nachricht M1 empfängt, verwendet es den in der ersten Nachricht M1 enthaltenen Zufallsstartwert, um einen verschlüsselten Schlüssel zu erzeugen, der Informationen bildet, die über eine zweite entsprechende Nachricht M2 an den ersten Rechner 103 gesendet werden.

2. Steuerverfahren nach dem vorhergehenden Anspruch, **dadurch gekennzeichnet, dass** jede vom zweiten Computer (104) gesendete zweite Nachricht (M2) vom zweiten Computer (104) so erzeugt wird, dass:
- die zweite Nachricht (M2) vor Eintritt des Ereignisses (Ev_1) erste Informationen (Info_1) enthält, die repräsentativ für den Betriebszustand (Ef) sind, der dem ersten Betriebsmodus (F1) zugeordnet ist,
- wenn das Ereignis (Ev_1) eingetreten ist, enthält die zweite Nachricht (M2) zweite Informationen (Info_2), die den Betriebszustand (Ef) repräsentieren und die Aktivierung des zweiten Betriebsmodus (F2) autorisieren.

3. Kontrollverfahren nach einem der vorhergehenden Ansprüche, **dadurch gekennzeichnet, dass**:
- der dem ersten Betriebsmodus (F1) zugeordnete Betriebszustand (Ef) ein Teilentriegelungszustand ist, so dass das Fahrzeug (100) während der Durchführung des ersten Betriebsmodus (F1) eingeschränkt betrieben wird,
- das Steuerverfahren einen Schritt (E105) der Authentifizierung einer Vorrichtung (107) zur Identifizierung des Fahrzeugs (100) umfasst, der zum Eintreten des Ereignisses (Ev_1) führt,
- der Schritt (E102) der Änderung des Betriebszustands (Ef) den Übergang vom Betriebszustand (Ef) in einen Zustand (E1) der vollständigen Entriegelung des Fahrzeugs (100) gewährleistet, der den Betrieb des Fahrzeugs (100) ohne Einschränkung gestattet.

4. Steuerverfahren nach dem vorhergehenden Anspruch, **dadurch gekennzeichnet, dass** der erste Betriebsmodus (F1) ein thermischer Vorkonditionierungsdienst des Fahrzeugs (100) ist, oder dass der erste Betriebsmodus (F1) ein autonomes Fahrzeug ist Parkservice (100).

5. Kontrollverfahren nach einem der Ansprüche 1 bis 2, **dadurch gekennzeichnet, dass**:
- der dem ersten Betriebsmodus (F1) zugeordnete Betriebszustand (Ef) ein vollständiger Entriegelungszustand (E1) ist, der einen uneingeschränkten Betrieb des Fahrzeugs (100) gestattet,
- das Steuerverfahren einen Schritt (E106) des Anforderns der Aktivierung des zweiten Betriebsmodus (F2) umfasst,
- das Ereignis (Ev_1) den Schritt (E106) des Anforderns der Aktivierung des zweiten Betriebsmodus (F2) umfasst.

6. Steuerverfahren nach dem vorhergehenden Anspruch, **dadurch gekennzeichnet, dass** eine Vorrichtung (107) zur Identifizierung des Fahrzeugs (100) während des Schritts der Umsetzung des ersten Betriebsmodus (F1) in einem Fahrgastraum des Fahrzeugs (100) vorhanden ist Bei dem Ereignis (Ev_1) handelt es sich um das Entfernen der Identifikationsvorrichtung (107) aus dem Fahrgastraum.

7. Steuerverfahren nach einem der Ansprüche 5 bis 6, **dadurch gekennzeichnet, dass** der zweite Betriebsmodus (F2) ein autonomer Parkdienst des Fahrzeugs (100) oder ein thermischer Vorkonditionierungsdienst des Fahrzeugs (100) ist, und dass das Steuerverfahren am Ende der Implementierung dieses Dienstes einen Schritt (E107) zum Stoppen des zweiten Betriebsmodus und einen Schritt zum Ändern des Betriebszustands (Ef) in Richtung eines gesperrten Zustands (E0) umfasst Fahrzeug (100), wodurch die Immobilisierung des Fahrzeugs (100) sichergestellt wird.

8. Wegfahrsperre (102) für Fahrzeug (100), **dadurch gekennzeichnet, dass** sie Mittel zur Durchführung der Schritte des Steuerverfahrens nach einem der vorhergehenden Ansprüche umfasst.

9. Fahrzeug (100), **dadurch gekennzeichnet, dass** es eine Wegfahrsperre (102) nach dem vorhergehenden Anspruch umfasst.

## Claims

1. Method for controlling a vehicle (100), said control method comprising a step (E100) of implementing a first mode (F1) of operation of the vehicle (100) for which the vehicle (100) operates at least partially, the first mode (F1) of operation being associated with an operating state (Ef) of the vehicle (100) authorizing said implementation of the first mode (F1) of operation, said method comprises:
- a step (E101) of periodic monitoring of the occurrence of an event (Ev_1) during the step (E100) of implementing the first operating mode (F1) to detect the event (Ev_1),
- a step (E102) of modification of the operating state (Ef), triggered by the detection of the event (Ev_1), to authorize the activation of a second mode (F2) of operation of the vehicle (100) associated with the modified operating state (Ef),
- a step (E103) of activation of the second operating mode (F2) of the vehicle authorized by the modified operating state (Ef)
and in that the vehicle (100) comprises a first computer (103) providing at least one service during the step (E100) of implementing the first mode (F1) of operation and a second computer (104) ensuring the management of the vehicle (100), and in that the monitoring step (E101) comprises:
- a periodic sending (E101-1), preferably at regular intervals, of a first message (M1) by the first computer (103) to the second computer (104),
- each time a first message (M1) is received by the second computer (104), a sending (E101-2) of a second message (M2) sent by the second computer (104) to the first computer (103),
- upon each reception of a second message (M2) by the first computer (103), processing (E101-3) of said second message (M2) by the first computer (103) triggering the implementation of step (E102) modification of the operating state (Ef) when the second message (M2) indicates that the event (Ev_1) has occurred, **characterized in that** each first message M1 comprising a random seed generated by the first computer 103, when the second calculator 104 receives the first message M1, it uses the random seed contained in the first message M1 to generate an encrypted key forming information to be sent to the first calculator 103 via a second corresponding message M2.

2. Control method according to the preceding claim, **characterized in that** each second message (M2) sent by the second computer (104) is produced by the second computer (104) such that:
- prior to the occurrence of the event (Ev_1), the second message (M2) includes first information (Info_1) representative of the operating state (Ef) associated with the first operating mode (F1),
- when the event (Ev_1) has occurred, the second message (M2) includes second information (Info_2) representative of the operating state (Ef) authorizing activation of the second operating mode (F2).

3. Control method according to any one of the preceding claims, **characterized in that**:
- the operating state (Ef) associated with the first operating mode (F1) is a partial unlocking state such that the vehicle (100) operates in a restricted manner during the implementation of the first operating mode (F1),
- the control method comprises a step (E105) of authentication of a device (107) for identifying the vehicle (100) which results in the occurrence of the event (Ev_1),
- the step (E102) of modifying the operating state (Ef) ensures the transition from the operating state (Ef) to a state (E1) of total unlocking of the vehicle (100) authorizing the operation of the vehicle (100) without restriction.

4. Control method according to the preceding claim, **characterized in that** the first mode (F1) of operation is a thermal pre-conditioning service of the vehicle (100), or **in that** the first mode (F1) of operation is a autonomous vehicle parking service (100).

5. Control method according to any one of claims 1 to 2, **characterized in that**:
- the operating state (Ef) associated with the first operating mode (F1) is a total unlocking state (E1) authorizing unrestricted operation of the vehicle (100),
- the control method includes a step (E106) of requesting activation of the second operating mode (F2),
- the event (Ev_1) includes the step (E106) of requesting activation of the second operating mode (F2).

6. Control method according to the preceding claim, **characterized in that** a device (107) for identifying the vehicle (100) being present in a passenger compartment of the vehicle (100) during the step of implementing the first mode (F1) of operation, the event (Ev_1) involves the removal of the identification device (107) from the passenger compartment.

7. Control method according to any one of claims 5 to 6, **characterized in that** the second mode (F2) of operation is an autonomous parking service of the vehicle (100) or a thermal pre-conditioning service of the vehicle ( 100), and **in that** at the end of the implementation of this service, the control method comprises a step (E107) of stopping the second mode of operation and a step of changing the state (Ef) of operation towards a locked state (E0) of the vehicle (100) ensuring immobilization of the vehicle (100).

8. Immobilizer device (102) for vehicle (100), **characterized in that** it comprises means for carrying out the steps of the control method according to any one of the preceding claims.

9. Vehicle (100), **characterized in that** it comprises an immobilizer device (102) according to the preceding claim.
